# EUROPÄISCHE PATENTSCHRIFT

(11) **EP 2 274 785 B1**
(45) Veröffentlichungstag und Bekanntmachung des Hinweises auf die Patenterteilung: **26.06.2013**
(21) Anmeldenummer: 09723632.7
(22) Anmeldetag: 23.02.2009
(51) Int. Cl.: H01M 8/04, H01M 8/24

(54) **VERFAHREN UND VORRICHTUNG ZUM ABSCHALTEN EINER BRENNSTOFFZELLE**
METHOD AND APPARATUS FOR THE DISCONNECTION OF A FUEL CELL
PROCÉDÉ ET DISPOSITIF DE MISE À L'ARRÊT D'UNE PILE À COMBUSTIBLE

(30) Priorität: 28.03.2008 AT 4912008
(43) Veröffentlichungstag der Anmeldung: 19.01.2011
(73) Patentinhaber: Fronius International GmbH, 4363 Pettenbach (AT)
(72) Erfinder: RIFFELSBERGER, Christian, A-4609 Thalheim/Wels (AT); SCHMITSBERGER, Thomas, A-4650 Lambach (AT); WOLFSEGGER, Simon, A-4230 Pregarten (AT)
(74) Vertreter: Sonn & Partner Patentanwälte
(86) Internationale Anmeldenummer: PCT/AT2009/000072
(87) Internationale Veröffentlichungsnummer: WO 2009/117749

(56) Entgegenhaltungen:
- WO-A-2007/142169
- DE-A1- 10 354 021
- US-A1- 2003 211 372
- US-A1- 2004 081 866
- US-A1- 2007 207 356
- US-A1- 2007 224 482

## Beschreibung

Die Erfindung betrifft ein Verfahren zum Abschalten einer Brennstoffzelle mit mehreren in Reihe geschalteten Zellen nach dem Oberbegriff des Anspruchs 1.

Ebenso betrifft die Erfindung eine Vorrichtung zum Abschalten einer Brennstoffzelle mit mehreren in Reihe geschalteten Zellen nach dem Oberbegriff des Anspruchs 3.

Die DE 103 54 021 A1 beschreibt ein Brennstoffzellensystem der gegenständlichen Art, wobei beim Abschaltvorgang die Zellspannung gemessen und die Reaktionsgase so lange verbraucht werden, bis die Zellspannungen 0 Volt erreicht haben.

Die US 2004/081866 A1 beschreibt ein Brennstoffzellensystem bei dem ein elektrischer Verbraucher fix mit jeder Zelle des Brennstoffzellensystems verbunden ist.

Die US 2007/0207356 A1 und die US 2003/0211372 A1 betreffen ebenfalls Brennstoffzellen-Stacks und Verfahren zum Betreiben derselben.

Aus der DE 100 59 393 A1 ist bekannt, dass nach dem Betrieb einer Brennstoffzelle Reste der Reaktionsgase, welche den elektronischen Strom durch eine chemische Reaktion erzeugen, entfernt werden. Dies erfolgt durch einen elektrischen Widerstand, welcher parallel zur Brennstoffzelle zugeschaltet wird.

Die DE 10 2004 034 071 A1 betrifft eine Abschaltprozedur für Brennstoffzellensysteme, wie sie beispielsweise in Fahrzeugen mit elektrischem Antrieb verwendet werden können. Beim Abschalten des Brennstoffzellensystems wird die Zufuhr eines Reaktionsgases, nämlich die Zufuhr des Wasserstoffs, unterbrochen und das verbliebene Restgas einem elektrischen Verbraucher zugeführt.

Die US 5,105,142 A beschreibt eine Entladeschaltung für eine Brennstoffzelle, wobei nach dem Abschalten der Brennstoffzelle der durch das Restgas erzeugte Strom über einen parallelen Widerstand, der auch variabel sein kann, abgeleitet wird.

Nachteilig ist hierbei, dass bei einer ungleichen Verteilung der Restgase in den einzelnen Zellen der Brennstoffzelle die Restgase unterschiedlich schnell verbraucht werden. In der Folge fließt solange ein Strom durch die Zellen, bis die Restgase aller Zellen verbraucht sind. Dadurch werden auch Zellen mit Strom durchflossen, deren Restgase bereits verbraucht wurden. Daraus resultiert, dass sich die Spannung an diesen gasverarmten Zellen umkehrt und es somit zu einer signifikanten Schädigung dieser lokalen Zellen kommen kann. In weiterer Folge wird der Wirkungsgrad sowie die Lebensdauer der Brennstoffzelle entsprechend verschlechtert.

Die Aufgabe der vorliegenden Erfindung besteht daher darin, die nach dem Abschalten der Brennstoffzelle in den einzelnen Zellen verbleibenden Reaktionsgase vollständig und kontrolliert zu verbrauchen.

Die Aufgabe der Erfindung wird in verfahrensmäßiger Hinsicht dadurch gelöst, dass die Schaltelemente von einer Steuervorrichtung derart angesteuert werden, dass der Verbraucher als erstes jener Zelle mit der höchsten gemessenen Spannung zugeschaltet wird, und danach die Zelle mit der nächsthöchsten Zellspannung mit dem Verbraucher verbunden wird, bis die letzte Zelle mit der geringsten Spannung an den Verbraucher zugeschaltet wird, wobei der zumindest eine Verbraucher durch einen Transistor im Linearbetrieb gebildet wird, und der Widerstandswert des Verbrauchers von der Steuervorrichtung geregelt wird. Vorteilhaft ist hierbei, dass die verbliebenen Reaktionsgase in jeder Zelle kontrolliert verbraucht werden, während die restlichen Zellen der Brennstoffzelle nicht belastet werden. Eine zellschädigende Spannungsumkehrung kann dadurch zuverlässig vermieden werden. Ebenso kann dadurch der Abschaltvorgang der Brennstoffzelle beschleunigt werden. Maßgeblich dabei ist, dass jede einzelne Zelle der Brennstoffzelle mit einem Verbraucher einen eigenen Stromkreis bildet, über den die verbliebenen Reaktionsgase der einzelnen Zelle verbraucht werden können, ohne die anderen Zellen zu beeinflussen.

Durch die Maßnahme, dass zumindest ein Verbraucher mit jeder Zelle verbunden wird, sodass der Verbraucher mit jeder einzelnen Zelle einen eigenen Stromkreis bildet, wird ein schnelles und sicheres Verbrauchen der Reaktionsgase jeder Zelle gewährleistet.

Dadurch, dass der Verbraucher schrittweise hintereinander jeder Zelle zugeschaltet wird, ist eine einfache und kostengünstige Durchführung des Verfahrens realisierbar.

Dadurch, dass der Verbraucher über zumindest ein Schaltelement pro Zelle jeder Zelle zugeschaltet wird, kann erreicht werden, dass die Brennstoffzelle im Betrieb durch den oder die Verbraucher nicht belastet wird.

Durch die Maßnahme, dass die Schaltelemente von einer Steuervorrichtung angesteuert werden, kann eine rasche und automatische Durchführung des Verfahrens erzielt werden.

Von Vorteil ist auch, wenn die Spannung jeder Zelle gemessen wird. Dadurch kann die Durchführung des Verfahrens unter Berücksichtigung der gemessenen Zellspannungen vorgenommen werden.

Gemäß der Erfindung ist vorgesehen, dass ein Verbraucher schrittweise in Abhängigkeit der gemessenen Zellspannung jeder Zelle zugeschaltet wird, wobei das Reaktionsgas jener Zelle mit der höchsten Zellspannung als erstes verbraucht wird und danach die Zelle mit der nächst höchsten Zellspannung mit dem Verbraucher verbunden wird. Dadurch kann ein besonders effizientes Abschalten der Brennstoffzelle vorgenommen werden. Die Vorrichtung zur Messung der Zellspannung kann auch während des Betriebs der Brennstoffzelle zur Messung der Zellspannungen eingesetzt werden. Vorteilhafterweise ist eine Messvorrichtung vorgesehen, welche über dieselben Schaltelemente, über die der Verbraucher mit den Zellen verbunden wird, an die Zellen geschaltet werden kann. Dadurch wird ein kostengünstiger Aufbau möglich.

Vorteilhafterweise wird der zumindest eine Verbraucher während der Messung der Zellspannung weggeschaltet, sodass dieser die Messung nicht beeinflusst.

Die Aufgabe der Erfindung wird aber auch durch eine oben erwähnte Vorrichtung gelöst, bei der der durch einen Transistor im Linearbetrieb gebildete Verbraucher über ein Schaltelement zwischen den Sammelleitungen angeordnet ist, und die Messvorrichtung über die Sammelleitungen parallel zum Verbraucher geschaltet ist, und die Steuervorrichtung zur Ansteuerung der Schaltelemente jener Zelle mit der höchsten gemessenen Spannung als erstes und danach der Zelle mit der nächsthöchsten Zellspannung bis zur letzten Zelle mit der geringsten Spannung ausgebildet ist, wobei der Widerstandswert des Verbrauchers von der Steuervorrichtung regelbar ist.

Dadurch, dass ein Verbraucher über zwei Sammelleitungen und zumindest jeweils ein Schaltelement mit jeder einzelnen Zelle verbunden ist, resultiert ein sehr effektiver, einfacher und kostengünstiger Aufbau.

Die Schaltelemente sind mit einer Steuervorrichtung verbunden, wodurchder Abschaltvorgang entsprechend automatisiert und der Verbraucher im Betrieb der Brennstoffzelle weggeschaltet werden kann, sodass die Brennstoffzelle durch den Verbraucher nicht belastet wird.

Die Steuervorrichtung ist zur schrittweisen Zuschaltung eines Verbrauchers an jede Zelle ausgebildet. Dadurch kann für alle Zellen (beispielsweise 100) des Brennstoffzellen-Stacks nur ein Verbraucher verwendet werden.

Die Vorrichtung zur Messung der Spannung der Zellen ist mit der Steuervorrichtung verbunden und die Steuervorrichtung zur Ansteuerung der Schaltelemente jeder Zelle in der genannten Abhängigkeit der gemessenen Zellspannung ausgebildet, wodurch ein besonders effizientes und rasches Durchführen der Abschaltung der Brennstoffzelle erzielt werden kann.

Wenn der Verbraucher über ein Schaltelement zwischen den Sammelleitungen angeordnet ist, kann dieser beispielsweise während des Betriebs der Brennstoffzelle weggeschaltet werden.

Diese Messvorrichtung kann über die Sammelleitungen parallel zum Verbraucher geschaltet sein.

Der Verbraucher ist durch einen Transistor im Linearbetrieb gebildet. Dadurch kann der durch das Verbrauchen der Reaktionsgase in den Zellen entstandene Strom konstant abgeführt und das Abschalten der Zelle bzw. Brennstoffzelle beschleunigt werden.

Die vorliegende Erfindung wird anhand der beigefügten, schematischen Zeichnungen näher erläutert.

Darin zeigen:
Fig. 1 den schematischen Aufbau einer Brennstoffzelle;
Fig. 2 eine schematische Darstellung der erfindungsgemäßen Vorrichtung zum Abschalten einer Brennstoffzelle; und
Fig. 3 eine schematische Darstellung der erfindungsgemäßen Vorrichtung zur Durchführung des erfindungsgemäßen Verfahrens in einer weiteren Ausführungsform.

Einführend wird festgehalten, dass gleiche Teile des Ausführungsbeispiels mit gleichen Bezugszeichen versehen werden.

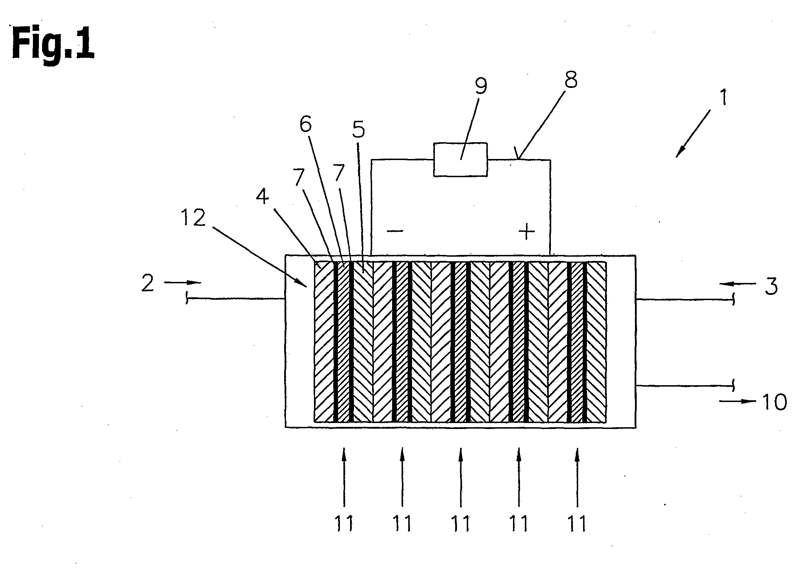

In Fig. 1 ist eine Brennstoffzelle 1 zur Erzeugung von Strom aus zumindest zwei Reaktionsgasen, vorteilhafterweise Wasserstoff 2 und Sauerstoff 3 bzw. Luft, dargestellt.

Im Allgemeinen sind Brennstoffzellen 1 elektrochemische Stromerzeuger, die direkt aus einer chemischen Verbindung Strom erzeugen. Dies erfolgt durch Umkehrung der elektrolytischen Zersetzung des Wassers, bei der durch einen Stromfluss die Reaktionsgase Wasserstoff 2 und Sauerstoff 3 gebildet werden.

Die Brennstoffzelle 1 ist aus mehreren in Reihe geschaltenen Zellen, welche als sogenannter Stack 12 bezeichnet wird, aufgebaut. In einer Zelle 11 der Brennstoffzelle 1 reagieren also die Reaktionsgase Wasserstoff 2 und Sauerstoff 3 miteinander, wodurch elektrischer Strom erzeugt wird. Eine Zelle 11 wird durch Anode 4, Kathode 5, Elektrolyt 6 und Katalysator 7 gebildet.

In der Brennstoffzelle 1 reagiert also Wasserstoff 2 mit Sauerstoff 3, wodurch elektrischer Strom erzeugt wird. Hierzu wird an einer Anode 4 der Wasserstoff 2 und an einer Kathode 5 der Sauerstoff 3 zugeführt, wobei die Anode 4 und die Kathode 5 durch ein Elektrolyt 6 getrennt sind. Des Weiteren sind die Anode 4 und die Kathode 5 an der dem Elektrolyt 6 zugewandten Seite mit einem Katalysator 7, meist aus Platin, beschichtet. Dadurch kann der Wasserstoff 2 mit dem Sauerstoff 3 reagieren, wobei dies in zwei getrennten Einzelreaktionen an den beiden Elektroden, der Anode 4 und der Kathode 5, erfolgt.

An der Anode 4 wird Wasserstoff 2 zugeführt, wobei der Wasserstoff 2 am Katalysator 7 reagiert und sich je ein Wasserstoffmolekül in zwei Wasserstoffatome spaltet. Ein Wasserstoffatom weist zwei Bestandteile, ein negativ geladenes Elektron und ein positiv geladenes Proton, auf, wobei jedes Wasserstoffatom sein Elektron abgibt. Die positiv geladenen Protonen diffundieren durch den Elektrolyten 6, welcher für die negativ geladenen Elektronen undurchlässig ist, zur Kathode 5.

An der Kathode 5 wird zeitgleich zum Wasserstoff 2 an der Anode 4 Sauerstoff 3 zugeführt. Die Sauerstoffmoleküle reagieren am Katalysator 7 und teilen sich jeweils in zwei Sauerstoffatome, welche sich an der Kathode 5 ablagern.

Somit sind an der Kathode 5 die positiv geladenen Protonen des Wasserstoffs 2 sowie die Sauerstoffatome, und an der Anode 4 die negativ geladenen Elektronen des Wasserstoffs 2 abgelagert. Dadurch herrscht an der Kathode 5 ein sogenannter Elektronenmangel und an der Anode 4 ein sogenannter Elektronenüberschuss. Daraus resultiert, dass sich die Anode 4 gegenüber der Kathode 5 auf negativem Potenzial befindet, die Anode 4 also einem Minuspol (-) und die Kathode 5 einem Pluspol (+) entspricht.

Verbindet man die beiden Elektroden, also die Anode 4 und die Kathode 5, mit einem elektrischen Leiter 8, so wandern die Elektronen aufgrund des Potenzialunterschiedes über den elektrischen Leiter 8 von der Anode 4 zur Kathode 5. Es fließt also elektrischer Gleichstrom durch die Leitung 8 bzw. einer damit verbundenen Last 9. Die Last 9 kann beispielsweise durch eine Batterie, die den produzierten Strom speichert, oder einen Wechselrichter, welcher den produzierten Gleichstrom in Wechselstrom umwandelt, gebildet sein.

Zwei Elektronen, welche über den elektrischen Leiter 8 von der Anode 4 zur Kathode 5 gewandert sind, werden jeweils von einem Sauerstoffatom in der Kathode 5 aufgenommen und werden zu zweifach negativ geladenen Sauerstoff-Ionen. Diese Sauerstoff-Ionen vereinigen sich mit den positiv geladenen Protonen des Wasserstoffs 2, welche durch den Elektrolyt 6 von der Anode 4 zur Kathode 5 diffundiert sind, zu Wasser 10. Das Wasser 10 wird als sogenanntes Reaktionsendprodukt aus der Kathode 5 ausgeschieden.

Zum Abschalten der Brennstoffzelle 1 wird bevorzugt die Zufuhr des Reaktionsgases Sauerstoff 3 bzw Luft unterbrochen. Dies hat zur Folge, dass in den Zellen 11 zumindest ein Teil der Reaktionsgase verbleiben. Ohne weitere Maßnahmen hätte dies zumindest bei einigen Typen von Brennstoffzellen 1 zur Folge, dass Wasserstoff 2 durch den Elektrolyt 6 diffundiert und sich in der Kathode 5 der Zellen 11 ein explosionsfähiges Gemisch bildet. Ebenso wird dadurch die Lebensdauer der Zellen 11, insbesondere des Elektrolyts 6 und Katalysators 7, stark reduziert. Um dies zu verhindern, werden gezielte Verfahren zum Abschalten der Brennstoffzelle 1 eingesetzt. Dadurch wird der Anteil des Sauerstoffs 3 im Reaktionsgas soweit verbraucht, dass die Brennstoffzelle 1 im abgeschalteten Zustand gefahrlos abgestellt werden kann. Da derartige Verfahren grundsätzlich aus dem Stand der Technik bekannt sind, wird im Folgenden nur auf die erfindungsgemäßen Details eingegangen.

Erfindungsgemäß wird nun das Verfahren zum Abschalten der Brennstoffzelle 1 derart ausgeführt, dass zumindest ein Reaktionsgas jeder einzelnen Zelle 11 vollständig verbraucht wird, indem der durch die Reaktionsgase in der Zelle 11 erzeugte Strom über zumindest einen jeder Zelle 11 getrennt zugeschalteten Verbraucher 13 abgeführt wird. Dadurch kann es im Gegensatz zum Beschalten aller Zellen 11 mit einem gemeinsamen Widerstand zu keiner für die Zellen 11 gefährlichen Spannungsumkehr im Falle einer vorzeitigen lokalen Gasverarmung kommen. Das Verbrauchen der Reaktionsgase in den Zellen 11 der Brennstoffzelle 1 wird auch als Abreagieren der Zellen 11 bezeichnet.

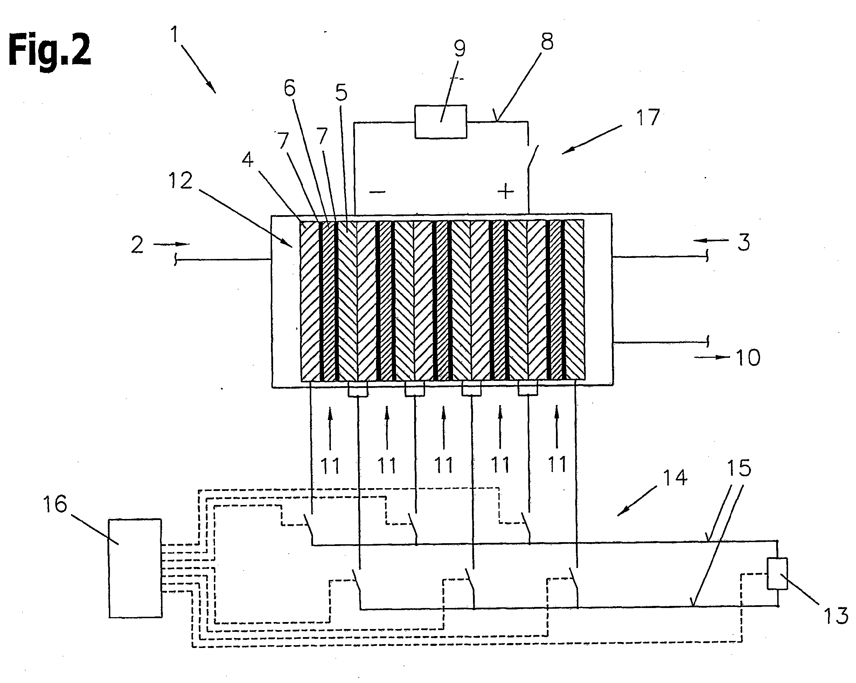

In Fig. 2 ist eine erfindungsgemäße Vorrichtung zur Ausführung des erfindungsgemäßen Verfahrens schematisch dargestellt.

Hieraus ist ersichtlich, dass der zumindest eine Verbraucher 13 bevorzugt über jeweils zwei Schaltelemente 14 an jede Zelle 11 des Stacks 12 zuschaltbar ist. Dies erfolgt derart, dass der Verbraucher 13 parallel zur Zelle 11 geschaltet wird und mit dieser einen Stromkreis bildet, welcher über die Schaltelemente 14 geschlossen wird. Damit dies nun für alle Zellen 11 des Stacks 12 getrennt möglich ist, wird jeweils jeder Pol der Zelle 11 über eines der Schaltelemente 14 mit einer der Sammelleitungen 15 verbunden. Dabei sind zwei benachbarte Pole von zwei Zellen 11 über eines der Schaltelemente 14 mit einer der Sammelleitungen 15 verbunden. Zwischen den Sammelleitungen 15 ist der Verbraucher 13 angeordnet, sodass dieser mit jeder Zelle 11 des Stacks 12 verbindbar ist. Somit kann ein Verbraucher 13 nacheinander bzw. schrittweise hintereinander über die Schaltelemente 14 an jede Zelle 11 des Stacks 12 zugeschaltet werden, um die Reaktionsgase jeder Zelle 11 vollständig zu verbrauchen. Sind die Reaktionsgase, insbesondere der Sauerstoff 3, in jener Zelle 11, an welcher der Verbraucher 13 zugeschaltet ist, vollständig verbraucht, wird der Verbraucher 13 an die nächste Zelle 11 zugeschaltet. Die Schaltelemente 14 werden vorzugsweise von einer Steuervorrichtung 16 entsprechend geregelt bzw. gesteuert, sodass der Verbraucher 13 stets nur eine Zelle 11 belastet. Ebenso wird die Umschaltung des Verbrauchers 13 von einer Zelle 11 auf die Nächste von der Steuervorrichtung 16 durchgeführt.

Der Verbraucher 13 kann durch einen variablen Widerstand, einen Transistor im Linearbetrieb, oder Ähnlichem gebildet sein, durch dens bis zum vollständigen Verbrauchen der Reaktionsgase ein ständiger Stromfluss in ausreichender Höhe gewährleistet wird. Der Widerstandswert des Verbrauchers 13 kann dabei von der Steuervorrichtung 16 entsprechend geregelt werden, sodass stets der optimale Wert eingestellt ist.

Bevorzugt wird während des erfindungsgemäßen Verfahrens die Last 9, welche während des Betriebs der Brennstoffzelle 1 mit Strom versorgt wird, durch einen Schalter 17 weggeschaltet. Dadurch wird erreicht, dass während dem Verbrauchen der Reaktionsgase nur die Zelle 11 mit dem zugeschalteten Verbraucher 13 einen Stromkreis bildet.

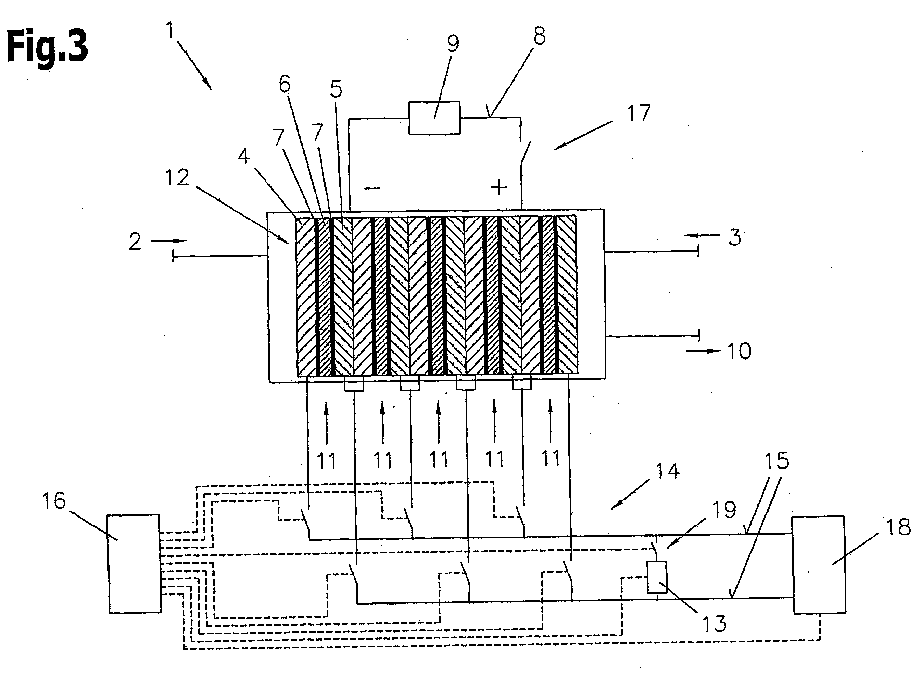

In Fig. 3 ist eine weitere Ausführungsvariante für das erfindungsgemäße Verfahren dargestellt.

Bei dieser Variante ist an den Sammelleitungen 15 zusätzlich eine Messvorrichtung 18 angeschlossen, mit der die Spannungen der einzelnen Zellen 11 erfasst werden können. Dazu werden die Schaltelemente 14 entsprechend verwendet, welche für die Zuschaltung des Verbrauchers 13, wie zuvor beschrieben, zuständig sind. Während der Spannungsmessungen wird allerdings der Verbraucher 13 bevorzugt durch ein Schaltelement 19 von den Sammelleitungen 15 getrennt, sodass eine exakte Spannungsmessung gewährleistet ist. Zu diesem Zweck ist ein Datenaustausch zwischen der Messvorrichtung 18 und der Steuervorrichtung 16 über eine entsprechende Datenleitung vorteilhaft.

Bei einer derartigen Messvorrichtung 18 wird das Verfahren zum Abschalten der Brennstoffzelle 1 bevorzugt in mehreren Schritten durchgeführt. Als erstes wird nach dem Abschalten der Brennstoffzelle 1 die Spannung jeder einzelnen Zelle 11 nacheinander bzw. schrittweise gemessen, wobei der Verbraucher 13 nicht zugeschaltet ist, und entsprechend gespeichert. Im nächsten Schritt werden die gespeicherten Spannungswerte der Zellen 11 absteigend sortiert. Dies hat zur Folge, dass im darauf folgenden Schritt die Zelle 11 mit dem höchsten Spannungswert als erste vollständig abreagiert wird. Dazu wird entsprechend der Verbraucher 13 durch das Schaltelement 19 und die entsprechende Zelle 11 anhand der Schaltelemente 14 mit den Sammelleitungen 15 verbunden, sodass ein geschlossener Stromkreis gebildet wird. Anschließend wird im nächsten Schritt die Zelle 11 mit dem zweithöchsten Spannungswert abreagiert. Dies setzt sich solange fort, bis die Zelle 11 mit der geringsten Spannung abreagiert wurde. Hierbei bleibt allerdings bevorzugt der Verbraucher 13 zwischen den Sammelleitungen 15 geschaltet, sodass nur die entsprechende Zelle 11 durch die Schaltelemente 14 auf die Sammelleitungen 15 geschaltet wird. Demzufolge werden also alle Zellen 11 des Stacks 12 entsprechend der gespeicherten Reihenfolge nacheinander bzw. schrittweise von der Steuervorrichtung 16 an den Verbraucher 13 geschaltet. Das heißt, dass jene Zellen 11 mit den meisten Reaktionsgasen, welche also den höchsten Spannungswert aufweisen, zuerst abreagiert werden. Somit wird also die Gefahr einer Schädigung der Zellen 11 äußerst gering gehalten.

Da die Messvorrichtung 18 ebenso an den Sammelleitungen 15 angeschlossen ist, ist diese demnach parallel zum Verbraucher 13 geschaltet. Dadurch wird in vorteilhafter Weise erreicht, dass während dem Abreagieren der Zelle 11 stets die Spannung gemessen werden kann. Daraus resultiert, dass der Widerstandswert des Verbrauchers 13 entsprechend an die gemessene Spannung angepasst werden kann, sodass im Wesentlichen ein konstanter Stromfluss bis zum vollständigen Verbrauch des Sauerstoffs 3 gewährleistet ist. Entsprechend endet dieser Stromfluss nach dem Verbrauch der Reaktionsgase wiederum selbstständig.

Somit werden die Sammelleitungen 15 mit den daran angeschlossenen Schaltelementen 14 erfindungsgemäß für zumindest zwei Funktionen herangezogen. Zum einen, dass der eine Verbraucher 13 getrennt mit jeder Zelle 11 des Stacks 12 verbindbar ist. Zum anderen, dass die Spannung jeder Zelle 11 über die an den Sammelleitungen 15 angeschlossene Messvorrichtung 18 gemessen werden kann. Der daraus resultierende Messwert kann einerseits im Betrieb für die Zellspannungsüberwachung verwendet werden, und andererseits zum Regeln des Verbrauchers 13 beim Abschalten des Stacks 12 bzw. der Brennstoffzelle 1 herangezogen werden. Zu diesem Zweck wird die Spannung der Zellen 11 beim Abreagieren der Zellen 11 berücksichtigt.

Zusammenfassend kann somit gesagt werden, dass zum Abreagieren einer Zelle 11 diese mit jeweils einem Schaltelement 14 mit einer der Sammelleitungen 15 verbunden ist und mit dem Verbraucher 13 einen geschlossenen Stromkreis bildet. Zusätzlich wird die Spannung jeder Zelle 11 während dem Abreagieren gemessen bzw. überwacht, sodass in vorteilhafter Weise jede Zelle 11 kontrolliert und schonend abreagiert wird. Ebenso ist dadurch vorteilhaft, dass die Gesamtzeit zum Abreagieren des Stacks 12 verkürzt wird, da jede Zelle 11 äußerst effizient abreagiert wird.

Allgemein sei noch erwähnt, dass die Erfindung auch bei einer Zusammenschaltung mehrerer Brennstoffzellen 1 eingesetzt werden kann, wobei im einfachsten Fall zur Durchführung des erfindungsgemäßen Verfahren lediglich ein Verbraucher 13 und allenfalls eine Messvorrichtung 18 erforderlich ist.

## Patentansprüche

1. Verfahren zum Abschalten eines Brennstoffzellen-Stacks (12) mit mehreren in Reihe geschalteten Zellen (11), wobei im Betrieb zumindest zwei Reaktionsgase zugeführt werden, und nach dem Betrieb die Zuführung zumindest eines Reaktionsgases unterbrochen wird und das zumindest in einer der Zellen (11) verbliebene Reaktionsgas verbraucht wird, indem der durch die Reaktionsgase in der Zelle (11) erzeugte Strom über zumindest einen über Sammelleitungen (15) und jeweils zumindest ein Schaltelement (14) pro Zelle (11) mit jeder Zelle (11) verbundenen Verbraucher (13) abgeführt wird, sodass der zumindest eine Verbraucher (13) mit jeder Zelle (11) einen eigenen Stromkreis bildet, und die Spannung jeder Zelle (11) mit einer Messvorrichtung (18) gemessen wird, und der zumindest eine Verbraucher (13) schrittweise in Abhängigkeit der gemessenen Spannung jeder Zelle (11) zugeschaltet wird, und dass zumindest ein Reaktionsgas jeder einzelnen Zelle (11) vollständig verbraucht wird, indem der durch die Reaktionsgase in der Zelle (11) erzeugte Strom über den zumindest einen der Zelle (11) zugeschalteten Verbraucher (13) abgeführt wird, **dadurch gekennzeichnet, dass** die Schaltelemente (14) von einer Steuervorrichtung (16) derart angesteuert werden, dass der Verbraucher (13) als erstes jener Zelle (11) mit der höchsten gemessenen Spannung zugeschaltet wird, und danach die Zelle (11) mit der nächst höchsten Zellspannung mit dem Verbraucher (13) verbunden wird, bis die letzte Zelle (11) mit der geringsten Spannung an den Verbraucher zugeschaltet wird, wobei der zumindest eine Verbraucher (13) durch einen Transistor im Linearbetrieb gebildet wird, und der Widerstandswert des Verbrauchers (13) von der Steuervorrichtung (16) geregelt wird.

2. Verfahren nach Anspruch 1, **dadurch gekennzeichnet, dass** der zumindest eine Verbraucher (3) während der Messung der Zellspannung weggeschaltet wird.

3. Vorrichtung zum Abschalten eines Brennstoffzellen-Stacks (12) mit mehreren in Reihe geschalteten Zellen (11) und mit Anschlüssen zur Versorgung mit zumindest zwei Reaktionsgasen, mit zumindest einem über zwei Sammelleitungen (15) und zumindest jeweils ein Schaltelement (14) mit jeder einzelnen Zelle (11) verbundenen Verbraucher (13) zur Abführung des durch das in jeder Zelle (11) nach dem Betrieb befindliche Reaktionsgas erzeugten Stromes, wobei eine Vorrichtung (18) zur Messung der Spannung der Zellen (11) vorgesehen ist, wobei die Schaltelemente (14) mit einer mit der Messvorrichtung (18) verbundenen Steuervorrichtung (16) verbunden sind, und die Steuervorrichtung (16) zur Ansteuerung der Schaltelemente (14) jeder Zelle (11) zur schrittweisen Zuschaltung der Zellen (11) in Abhängigkeit der gemessenen Zellspannung ausgebildet ist, **dadurch gekennzeichnet, dass** der durch einen Transistor im Linearbetrieb gebildete Verbraucher (13) über ein Schaltelement (19) zwischen den Sammelleitungen (15) angeordnet ist, und die Messvorrichtung (18) über die Sammelleitungen (15) parallel zum Verbraucher (13) geschaltet ist, und die Steuervorrichtung (16) zur Ansteuerung der Schaltelemente (14) jener Zelle (11) mit der höchsten gemessenen Spannung als erstes und danach der Zelle (11) mit der nächst höchsten Zellspannung, bis zur letzten Zelle (11) mit der geringsten Spannung ausgebildet ist, wobei der Widerstandswert des Verbrauchers (13) von der Steuervorrichtung (16) regelbar ist.

## Claims

1. A method for shutting down a fuel cell stack (12) including several cells (11) connected in series, wherein at least two reaction gases are supplied during operation and the supply of at least one reaction gas is interrupted after operation, and wherein the reaction gas remaining in at least one of the cells (11) is consumed by the current generated in the cell (11) by the reaction gases being dissipated via at least one consumer (13) that is connected with each cell (11) via manifolds (15) and via at least one switching element (14) per cell (11) such that the at least one consumer (13) forms a separate circuit with each cell (11), and that the voltage of each cell (11) is measured with a measuring device (18), and that the at least one consumer (13) is stepwisely connected to each cell (11) as a function of the voltage measured for each cell (11), and that at least one reaction gas of each individual cell (11) is completely consumed by the current generated in the cell (11) by the reaction gases being dissipated via the at least one consumer (13) connected to the cell (11), **characterized in that** the switching elements (14) are controlled by a control device (16) such that the consumer is first connected to the cell (11) with the highest voltage measured, and then the cell (11) with the next-highest cell voltage is connected to the consumer (13) until the last cell (11) with the lowest voltage is connected to the consumer, wherein the at least one consumer (13) is formed by a transistor in linear operation and the resistance value of the consumer (13) is controlled by the control device (16).

2. The method according to claim 1, **characterized in that** the at least one consumer (3) is disconnected during the measurement of the cell voltage.

3. A device for shutting down a fuel cell stack (12) including several cells (11) connected in series and connections for supplying at least two reaction gases, comprising at least one consumer (13) that is connected with each individual cell (11) via two manifolds (15) and via at least one switching element (14) for dissipating the current generated by the reaction gas present in each cell (11) after operation, wherein a device (18) for measuring the voltage of the cells (11) is provided, wherein the switching elements (14) are connected with a control device (16) connected with the measurement device (18), and the control device (16) is configured for controlling the switching elements (14) of each cell (11) for the stepwise connection of the cells (11) as a function of the cell voltage measured, **characterized in that** the consumer (13) that is formed by a transistor in linear operation is arranged via a switching element (19) between the manifolds (15), and the measurement device (18) is connected in parallel with the consumer (13) via the manifolds (15), and the control device (16) is designed for controlling the switching elements (14) of first the cell (11) with the highest voltage measured, and then the cell (11) with the next-highest cell voltage, until the last cell (11) with the lowest voltage, wherein the resistance value of the consumer (13) is controllable by the control device (16).

## Revendications

1. Procédé de débranchement d'un empilement de cellules à combustible (12) avec plusieurs cellules (11) montées en série, dans lequel en fonctionnement au moins deux gaz de réaction sont acheminés et après le fonctionnement l'acheminement d'au moins un gaz de réaction est interrompu et le au moins un gaz de réaction demeuré dans l'une des cellules (11) est consommé, du fait que le courant généré par les gaz de réaction dans la cellule (11) est évacué via au moins un consommateur (13) relié à chaque cellule (11) via des lignes collectrices (15) et respectivement au moins un élément de branchement (14) par cellule (11), de telle sorte que ledit au moins un consommateur (13) forme avec chaque cellule (11) son propre circuit de courant, et la tension de chaque cellule (11) est mesurée avec un dispositif de mesure (18), et le au moins un consommateur (13) est raccordé par étapes en fonction de la tension mesurée de chaque cellule (11), et de telle sorte qu'au moins un gaz de réaction de chaque cellule (11) individuelle est totalement consommé, du fait que le courant généré par les gaz de réaction dans la cellule (11) est évacué via le au moins un consommateur (13) raccordé à la cellule (11), **caractérisé en ce que** les éléments de branchement (14) sont guidés par un dispositif de commande (16) de telle sorte que le consommateur (13) est raccordé en premier lieu à la cellule (11) présentant la tension mesurée la plus élevée, et ensuite la cellule (11) avec la tension de cellule la plus élevée suivante est reliée au consommateur (13), jusqu'à ce que la dernière cellule (11) avec la tension la plus faible soit raccordée au consommateur, dans lequel le au moins un consommateur (13) est formé par un transistor fonctionnant en mode linéaire et la valeur de la résistance du consommateur (13) est réglée par le dispositif de commande (16).

2. Procédé selon la revendication 1, **caractérisé en ce que** le au moins un consommateur (13) est débranché pendant que la tension de cellule est mesurée.

3. Dispositif de débranchement d'un empilement de cellules à combustible (12) avec plusieurs cellules (11) montées en série et avec des raccordements permettant de recevoir au moins deux gaz de réaction, avec au moins un consommateur (13) relié à chaque cellule (11) individuelle via deux lignes collectrices (15) et au moins respectivement un élément de branchement (14) pour évacuer le courant généré par le gaz de réaction se trouvant dans chaque cellule (11) après le fonctionnement, dans lequel est prévu un dispositif (18) pour mesurer la tension des cellules (11), dans lequel les éléments de branchement (14) sont reliés à un dispositif de commande (16) relié au dispositif de mesure (18), et le dispositif de commande (16) est configuré pour guider les éléments de branchement (14) de chaque cellule (11) pour le raccordement par étapes des cellules (11) en fonction de la tension mesurée, **caractérisé en ce que** le consommateur (13), formé par un transistor fonctionnant en mode linéaire, est agencé entre les lignes collectrices (15) via un élément de branchement (19), et le dispositif de mesure (18) est monté parallèlement au consommateur (13) via les lignes collectrices (15), et le dispositif de commande (16) est configuré pour guider en premier lieu les éléments de branchement (14) de la cellule (11) avec la tension mesurée la plus élevée, et ensuite ceux de la cellule (11) avec la tension de cellule la plus élevée suivante, jusqu'à la dernière cellule (11) avec la tension la plus faible, dans lequel la valeur de la résistance du consommateur (13) peut être réglée par le dispositif de commande (16).
